Europäisches Patentamt

(19) European Patent Office

Office européen des brevets

(11) Publication number: **0 017 463**
**B1**

(12) **EUROPEAN PATENT SPECIFICATION**

(45) Date of publication of patent specification: **24.11.82**

(21) Application number: **80301016.4**

(22) Date of filing: **01.04.80**

(51) Int. Cl.³: **B 01 D 53/22,** C 01 B 3/50
//B01D13/00

(54) Gas recovery process.

(30) Priority: **03.04.79 US 26516**

(43) Date of publication of application:
**15.10.80 Bulletin 80/21**

(45) Publication of the grant of the patent:
**24.11.82 Bulletin 82/47**

(84) Designated Contracting States:
**BE DE FR GB IT NL**

(56) References cited:
**BE - A - 860 811**
**DE - A - 1 517 939**
**DE - A - 2 360 199**
**DE - A - 2 515 552**
**US - A - 3 415 038**
**US - A - 4 130 403**

(73) Proprietor: **MONSANTO COMPANY**
**Patent Department 800 North Lindbergh**
**Boulevard**
**St. Louis, Missouri 63166 (US)**

(72) Inventor: **Bollinger, Wayne Allen**
**1203 Balmoral Drive**
**Cary North Carolina 27511 (US)**

(74) Representative: **McLean, Peter et al,**
**Monsanto p.l.c. Telford House 14 Tothill Street**
**London, SW1H 9LH (GB)**

Courier Press, Leamington Spa, England.

Gas recovery process

## Background of the invention

This invention relates to a process for the separation and recovery of gases from mixtures of gases, and particularly relates to such a separation and recovery process from gas mixtures subject to widely varying flow rates.

A variety of processes and means have been developed and employed for the separation and recovery of one or more gases such as oxygen, nitrogen, helium, carbon dioxide, carbon monoxide, hydrogen sulfide and hydrogen from mixtures thereof with one or more others of those gases or other gases such as the alkanes, methane, ethane and the like. Many gas mixture streams from which recovery is desired are subject to wide variations in flow rate. These variations are frequently due to the type of control and operation of the processes from which the gas mixtures are derived. For instance, processes involving hydrogen-containing gas mixtures are among the most common. In hydrogen using processes, such as hydrogenations, there is frequently derived a purge or vent gas containing a relatively high content of unreacted hydrogen. This high hydrogen content is usually due to the requirement for a high partial pressure of hydrogen for efficient hydrogenation. Economical recovery and recycle of this purged hydrogen is particularly attractive. Such recovery is made difficult, however, by the variations in flow rate of the purge gas. This can be induced by control features directed toward optimizing the reaction to produce the hydrogenated product, such as maintaining a minimum hydrogen pressure or a minimum hydrogen content in the hydrogenation reaction zone. Such control features often result in short term rapid increases or severe curtailments or total termination of purge gas flow. Sometimes such curtailments are accompanied by changes in pressure of the purge gas varying by as much as 10 to 15% from the usual pressure. The more usual result is severe drops or increases in the flow rate of the purge gas. This is frequently the case when the method of control utilized is to increase or decrease the flow of the reactant being hydrogenated to the hydrogenation reaction zone causing the hydrogen pressure or hydrogen content to trigger such control feature. The lag time in changing the flows of reactants for such control purposes is frequently substantial and results in the wide variations.

Similarly, in hydrogen-generating processes, such as reforming of hydrocarbons to produce gas mixtures containing hydrogen, there are also many sources of variations in the flow rate. These may include changes in catalyst activity and more sudden upsets such as plugging or removal from service of part of the tubes of a tubular reforming reactor and malfunctions in the carbon dioxide removal and/or methanation reaction systems which are normally employed in such hydrogen-generating processes.

When two such processes are employed in series, such as when a hydrogen-generating process supplies a hydrogenation process, the effects of any variations in the hydrogen flow rate and multiplied and cumulative in their effect on the purge gas from the hydrogenation process to which the hydrogen is supplied. These cumulative effects make such purge gas difficult to treat for recovery of the hydrogen content by previous recovery procedures.

For instance, attempts to employ a cyclic pressure selective adsorption process or pressure swing adsorption process for such recoveries have sometimes proved unsuccessful since such cyclic selective adsorption processes do not tolerate substantial variations of flow rates or pressures of the feed gas mixtures to be subjected to the selective adsorption. Decreases in pressure can result in desorption of the preferentially adsorbed gases contaminating the unadsorbed gas product. Wide fluctuations and changes in flow rate result in out-of-phase operation of the timed sequence switching valves normally used to control the multiple selective adsorbers in such processes. Although means exist for either damping the relatively small and relatively short term variations or accommodating the selective adsorption systems to accept widely varying flows of feed gas mixtures, such means are frequently uneconomical and have not generally been adopted. Consequently, a method for recovery of specific gases, and particularly of hydrogen, from such gas mixtures subject to widely variable flow rates would be very advantageous.

It has now unexpectedly been found that a more permeable gas present in a gas mixture, which mixture is subject to wide variations in flow rate, can be recovered as a more concentrated gas mixture having narrow changes in flow rates by means of a process utilizing a selective membrane. The process involves the use of a membrane permeator comprising such membrane to produce a permeated gas mixture of the desired reduced variation in flow rate.

## Summary

In accordance with the invention there is provided a process for recovering a gas from a feed gas mixture comprising contacting said gas mixture with one surface of a membrane selectively permeable to the said gas wherein the flow rate of the said gas mixture varies over a total range of at least $1.8\times$ the minimum measured positive flow rate, at a positive partial pressure differential for said gas and at a membrane number of at least .5, said membrane number consisting of the quotient determined by the formula

$$\frac{Q_f}{A.\Delta P.P/l_{gas}}$$

wherein $Q_f$ is the flow rate of said gas mixture, A is the permeation surface area of said membrane, $\Delta P$ is the differential in pressure between said gas mixture and the permeated gas mixture and $P/l_{gas}$ is the permeability to said gas of said membrane, and recovering from the opposite surface of said membrane a permeated gas mixture more concentrated in said gas at a flow rate having a percentage variation no more than 0.6 of the percentage variation in the flow rate of the said gas mixture.

The invention also comprises a process for recovering a gas from a gas mixture comprising contacting said gas mixture with one surface of a membrane selectively permeable to the said gas wherein the flow rate of said gas mixture varies over a total range of at least 1.8x the minimum measured positive flow rate, at a positive partial pressure differential for said gas and a membrane number of at least .5, said membrane number consisting of the quotient determined by the formula

$$\frac{Q_f}{A.\Delta P.P./l_{gas}}$$

wherein $Q_f$ is the flow rate of said gas mixture. A is the permeation surface area of said membrane, $\Delta P$ is the differential in pressure between said gas mixture and the permeated gas mixture and $P/l_{gas}$ is the permeability to said gas of said membrane, and recovering from the opposite surface of said membrane is permeated gas mixture more concentrated in said gas at a flow rate varying no more than 25 percent from 0.8 of maximum potential flow rate of the permeated gas mixture, said maximum potential flow rate of the permeated gas mixture determined by the formula

$$\frac{P/l_{gas}.A.(P_f X_{f\ gas}-P_p X_{p\ gas})}{X_{p\ gas}}$$

wherein $P/l_{gas}$ and A are as above, $P_f$ and $P_p$ are the respective pressures of said gas mixture and said permeated gas mixture and $X_{f\ gas}$ and $X_{p\ gas}$ are the respective mole fractions of said gas in said gas mixture and said permeated gas mixture.

The present invention advantageously provides a gas mixture more concentrated in a faster permeating gas at flow rates having much less variation than the feed gas mixture. Such gas mixtures are frequently suitable for many uses including recycle to the producing process without additional treatment or equipment for control of feed rate. A preferred embodiment is the provision of a more highly concentrated hydrogen-containing gas mixture which is generally the fastest permeating gas in many gas mixtures available in industrial processes for hydrocarbon refining, petrochemical production and industrial gas production and processing. A particularly preferred embodiment is the provision of a concentrated hydrogen-containing gas mixture, recovered from the purge gas of a hydrogenation process with widely variable flow rates, which is suitable for direct recycle to such process or other use at flow rates having small variations and requiring no additional control.

Brief description of the drawing

Figure 1 is a graphic representation of the data recorded from Example 1 which demonstrates the relative variability of flow rates of feed and permeated gas mixtures in standard cubic meters per hour.

Figure 2 is a graphic representation of the data compiled from Examples 2 through 6 and demonstrates the relationship between the membrane number and the permeated gas mixture flow rate expressed as percent of maximum potential flow rate of the permeated gas mixture.

Description of preferred embodiments

Gas mixtures suitable for treatment by the process of the present invention can be any mixtures having one or more desired gases which permeate faster through a membrane of a membrane permeator than other gas or gases in the mixtures and which gas mixtures are subject to relatively wide variations in flow rate. Such suitable gas mixtures are available from a wide variety of sources.

Desired gases are frequently the faster permeating gases present in various gas mixtures. Such is the case with helium when present in mixtures with methane and other gases as in natural gas production, and with carbon dioxide in mixture with methane, as in natural gas, and with other gases, such as hydrocarbon gases, in various gas mixtures from refining and petrochemical processes. Such is also the case with oxygen in gas mixtures with nitrogen and other gases in air and in off-gas mixtures from oxidation and partial oxidation reactions, and with hydrogen sulfide in mixture with methane and other gases in natural gas and in off-gases from combustion or hydrodesulfurization processes. Quite often the desired gas is hydrogen when present in various gas mixtures from a wide variety of industrial processes such as hydrogen treating processes in refining and petrochemical production. Such processes include hydrogenations generally, hydrodesulfurizations, hydrodealkylations and the like. Hydrogen is the desired gas in the output of hydrocarbon-water reforming processes. Also hydrogen is available in mixture with nitrogen and other gases from the purge gases of ammonia synthesis processes.

Often such gas mixtures are subject to wide variations or fluctuations in their flow rate. Frequently these variations and fluctuations in flow rates are the result of the mode of operation of the processes from which the gas mixtures are derived. Methods of control of such processes can vary widely and are frequently designed to achieve or maintain a desired level of some variable in a process by means of process changes that grossly affect the flow rates of the product gases produced or purge gases withdrawn from such processes. Gross changes in the flow rates of product, purge or vent gas mixtures can be the result of down time of a portion of reaction vessels, such as a bank of tubes in a tubular reactor, as well as malfunctions requiring removal from service of gas treating systems or apparatus normally operative as a part of the process and the like. Irrespective of the reason or reasons for the wide variations or gross changes in the flow rates and pressures encountered in gas mixtures containing a desired faster permeating gas, the process of the present invention is capable of recovering from such gas mixtures permeated gas mixtures more concentrated in the faster permeating gas and having variations in flow rate substantially smaller in magnitude than the varying flow rates of the feed gas mixtures. Pressure changes of the order of 10 to 15 percent do not alter the range of flow rate variations found in the permeated gas mixtures.

The extent of variation in flow rates of the feed gas mixtures which can be utilized by the process of the present invention is very broad. It has unexpectedly been found that gas mixtures having a total range of variation in flow rate of at least about 1.8 times the minimum measured positive flow rate, i.e., the maximum flow rate exceeds the minimum measured positive flow rate by at least about 1.8X, are particularly suited for use in the process of this invention. Any higher multiple of the minimum flow rate can be accommodated by the process, say 5x or 10x, up the maximum flow rate which can be realized in the membrane permeator employed. Preferably, the flow rate variations in feed gas mixtures will have a total range of from about 1.8x to 10x, and more preferably from about 1.8x to 5x.

By the process of the present invention there is obtained a permeated gas mixture, containing the desired gas in increased concentration, which varies relatively narrowly in flow rate. The percentage variation in the flow of the permeated gas mixture is not more than 0.6 of the percentage variation in the flow rate of the feed gas mixture. Preferably, such variation is not more than 0.5 of the percentage variation in the flow rate of the feed gas mixture. By percentage variation in the flow rate of the feed gas mixture is meant the change, either increase or decrease, in flow rate as a percentage of the flow rate before the change. Thus, when the flow rate changes from a rate of 100 to 200 SCMH (standard cubic meters per hour) the percentage variation is 100 percent. When the flow rate changes from 200 to 100 SCMH the percentage variation is 50 percent.

Another way of expressing the relatively narrow variation in the flow rate of a permeated gas mixture is in relation to the maximum potential flow rate of the permeated gas mixture. The latter is a theoretical but determinable quantity representing the theoretical maximum flow rate of the permeated gas mixture obtainable when there is essentially no change in the composition from the feed gas mixture to the effluent non-permeated gas mixture. Such a condition would only occur at infinitely great flows of feed and non-permeated gas mixture. The quantity denoted as "maximum potential flow rate of the permeated gas mixture" can be determined by the formula

$$Q_{MAX.}=\frac{P/l_{gas}.A.(P_f X_{f\ gas}-P_p X_{p\ gas})}{X_{p\ gas}}$$

wherein $Q_{MAX.}$ is the maximum potential flow rate, in standard cubic centimeters per second, of the permeated gas mixture, $P/l_{gas}$ is the permeability of the membrane in scc/cm².sec.cmHg to the faster permeating gas, A is the permeating surface area of the membrane in cm², $P_f$ and $P_p$ are the respective pressures of the feed gas mixture and the permeated gas mixture in cmHg and $X_{f\ gas}$ and $X_{p\ gas}$ are the respective concentrations, in mole fraction, of the faster permeating gas in the feed gas mixture and in the permeated gas mixture. When hydrogen is the faster permeating gas the P/l, $X_f$ and $X_p$ are those for hydrogen.

The concentration of the faster permeating gas in a permeated gas mixture can be determined when the other variables are known by solving a series of the above equations. Such solution can be accomplished either algebraically if only two gases are present in the feed gas mixture or by trial and error when more than two gases are present.

When the quantity denominated as maximum potential flow rate of the permeated gas mixture is determined the measured flow rate of the permeated gas mixture can be related thereto, most conveniently as a fraction thereof. Since such maximum potential flow rate can only be approached in practice, all measured flow rates for permeated gas mixtures will be less than 100 percent of such maximum potential flow rate. Hence, it is convenient to establish a fraction of such maximum potential flow rate, such as .8, as a base line and define a desired area of operation as permeated gas mixture flow rates varying up or down from such base line by a plus or minus percentage thereof. Thus, a range of variation in flow rates of permeated gas mixtures of not more than 25 percent from .8 of the maximum potential flow rate will embrace those flow rates of from 60 to 99.9 percent of such maximum potential flow rate. The variation in permeated gas mixture flow rates reponsive to feed gas mixture flow rates varying over a total range at least about 1.8x will fall within such 25 percent variation from .8 of maximum potential flow rate of the permeated gas mixture. Preferably, such flow rates of permeated gas mixtures will vary by not more than 20 percent from .8 of maximum potential flow rate of the permeated gas mixture.

The unexpected result of recovery of a permeated gas mixture having variations in flow rate within the above-described range from a feed gas mixture of more widely variable flow rates is obtained by the process of this invention when a minimum membrane number is met in the use of a selective membrane to permeate a faster permeating gas.

The term membrane number is defined as the quotient determined by the formula

$$\frac{Q_f}{A.\Delta P.P/l_{gas}}$$

wherein $Q_f$ is the flow rate of the feed gas mixture in standard cubic centimeters per second, A is the permeation surface area in $cm^2$ of the membrane used, $\Delta P$ is the differential in pressure in cmHg between the feed gas mixture and the permeated gas mixture and $P/l_{gas}$ is the permeability of the membrane, in $sec/cm^2.sec.cmHg$, to the faster permeating gas. The above-defined membrane number is thus a dimensionless number whose value establishes the relationship between the flow rate of the feed gas mixture and the permeating surface area, the pressure differential across the membrane and the permeability of the membrane to the specific faster permeating gas.

In the process of the present invention a membrane number, as defined above, of at least .5 has been found to result in recovery of a permeated gas mixture more concentrated in the faster permeating gas and varying in flow rate by no more than 25 percent from .8 of maximum potential flow rate of the permeated gas mixture. Expressed alternatively, with a membrane number of at least .5 the permeated gas mixture has a percentage variation in flow rate of no more than 0.6 of the percentage variation in flow rate of the feed gas mixture. At lower membrane numbers the flow rate variations in the permeated gas mixtures tend to more nearly reflect the magnitude of the variation in the flow rates of the feed gas mixtures, the lower such membrane number the more nearly the variations are reflected. At higher membrane numbers above .5 the variations in the flow rates of the permeated gas mixture have been found to be of decreasing magnitude. The total recovery of the faster permeating gas, as a percentage of the total of such gas present in the feed gas mixture, is reduced at increasing flow rates. Hence, it is generally preferred, in the process of the present invention, that the membrane number fall within the range of .5 to 5.0, and most preferably within the range of .5 to 3.3.

In practice, the membrane number is employed when designing a recovery process for a faster permeating gas from a feed gas mixture known to have widely varying flow rates. Once the total range of such varying flow rates of feed gas mixture is determined and the other factors influencing the membrane number established, it can be determined if the design will function to achieve the desired production of a permeated gas mixture more concentrated in the faster permeating gas and having the above range of variations in flow rate.

In operation such a process will produce a recovered permeated gas mixture having the narrow range of variations in flow rate described above. The process will accommodate the full range of variation in the flow rates of the feed gas mixture while recovering a permeated gas mixture having the described narrow range of flow rate variation.

The total permeation surface area of the membrane exercises a considerable influence on the membrane number. Thus it is desirable to size the membrane permeators as to available permeation membrane surface area with the preferred range of such membrane number in mind. When it is desired to employ a membrane permeator unit which will accommodate extremely large increases in feed gas mixture flow rate and still provide for recovery of a reasonable percentage of the total available faster permeating gas such a unit can provide for multiple membrane permeators in parallel. These can be placed on stream or removed therefrom by activating one or more valves in response to large scale changes in the feed gas mixture flow rate. In this manner the membrane number can be kept within the desired range while providing for such large scale changes in the feed gas mixture flow rate.

The pressure differential between the feed gas mixture on one side of the membrane and the permeated gas mixture on the opposite side of the membrane also influences the value of the membrane number. Pressure differentials from as low as one atmosphere to as great as 150 atmospheres or higher can be accepted by membranes without damage to such membranes. Frequently the presssure at which the feed gas mixture is available and the pressure desired in the permeated gas mixture impose restraints which serve to determine this pressure differential. Any pressure differential within the above range which will provide a positive partial pressure differential for the faster permeating gas can be accommodated in the process.

A positive partial pressure differential for the faster permeating gas is required to be maintained across the membrane, i.e., a partial pressure differential sufficient to maintain permeation of the faster permeating gas. Positive pressure differentials for the faster permeating gas can range from about 1 atmosphere to about 135 atmospheres and preferably will range from about 3 atmospheres to about 120 atmospheres. An increased partial pressure differential will result in more rapid permeation of the faster permeating gas when such is desired.

The third factor influencing the membrane number is the permeability, P/l, of the membrane to the faster permeating gas. The permeability, P/l, of a particular gas through a membrane can be defined as the volume of gas at standard temperature and pressure which passes through the membrane per square centimeter of separating surface area per second for a partial pressure drop of one centimeter of mercury across the membrane. The permeability varies with selection of the particular membrane to be used.

Particularly desirable membranes exhibit hydrogen permeabilities of at least $1 \times 10^{-6}$ and preferably from $1 \times 10^{-5}$ to $5 \times 10^{-4}$ cubic centimeters of hydrogen at standard temperature and pressure per square centimeter of membrane surface area per second and at a partial pressure drop of one centimeter of mercury across the membrane. Membranes desirable for use with other faster permeating gases such as helium, carbon dioxide, oxygen and hydrogen sulfide will exhibit permeabilities for those faster permeating gases of at least $1 \times 10^{-7}$ and preferably from about $1 \times 10^{-6}$ to about $1 \times 10^{-4}$ when expressed in the above units.

The selectivity or separation of a membrane is described in terms of the ratio of the permeability of the fast permeating gas to the permeability of a slower permeating gas. The ratio of the permeabilities of two specific gases is referred to as the separation factor, or $\alpha$, of the first gas in respect to the second gas, such as S.F.$H_2$/$CH_4$ or $\alpha$ $H_2$/$CH_4$. Desirably the separation factor for the faster permeating gas which is to be concentrated over at least one slower permeating gas will be at least 5 and preferably at least about 10. Separation factors for hydrogen, a frequently desired faster permeating gas, over methane or other gases of 50 or 100 or greater are provided by certain membranes.

The total pressure of the feed gas mixture is not limited except as maintenance of the presssure differential between the feed gas mixture and the permeated gas mixture may require. Thus, such a total pressure can range from as low as two atmospheres to as high as 350 atmospheres depending upon the pressure ratings of the membrane permeator shell or casing and the ancillary piping associated therewith.

The temperature of the feed gas mixture is generally controlled to less than 60°C and preferably less than 40°C in order to avoid the possibility of injury to the membranes comprising the membrane permeator since most of such membranes are organic polymers and subject to loss of strength at higher temperatures. Within the recommended range the effect of higher temperatures is to raise the rate of permeation of the permeating gases and hence the flow rate of the permeated gas mixture product. The effect however is not large within this range. Preferably the temperature of the feed gas mixture is approximately ambient, ranging from approximately 0°C to about 35°C.

The concentrations or purities of the desired faster permeating gas in the permeated gas mixture will depend on several factors, although such concentration will always be higher than that in the feed gas mixture. Such concentration will depend to an extent on the concentration of the desired gas in the feed gas mixture, higher concentrations in the feed gas mixture generally leading to recoveries of higher purity permeated gas mixture product. At higher membrane numbers higher purities of the desired gas in the permeated gas mixtures will be produced from feed gas mixtures having the same concentration of the desired gas. Generally it has been found that when the membranes used have separation factors of at least about 5 the concentration of the faster permeating gas in the permeated gas mixture will comprise about 80 percent or more when the feed gas mixture comprises about 45 percent or more of such gas. Permeated gas mixtures of lower concentrations of the faster permeating gas which are produced from feed gas mixtures having lower concentrations of such gas are suitable for many uses and their recovery is often advantageous.

Any suitable materials selectively permeable to the faster permeating gases, and particularly hydrogen, as compared to the slower permeating gases such as methane and other alkanes, nitrogen or carbon monoxide, may be employed for the membranes. Suitable membrane materials include metallic and other inorganic membranes as well as organic polymers or organic polymers mixed with inorganics such as fillers, reinforcements and the like. Typical organic polymers which are suitable for the formation of planar, spiral wound and hollow fiber membranes can be substituted or unsubstituted polymers and may be selected from polysulfones; polystyrenes, including styrene-containing polymers such as acrylonitrile-styrene copolymers, styrene-butadiene copolymers and styrene-vinylbenzyl halide copolymers; polycarbonates; cellulosic polymers, such as cellulose acetate, cellulose acetate-butyrate, cellulose propionate, ethyl cellulose, methyl cellulose, nitrocellulose, etc.; polyamides and polyimides, including aryl polyamides and aryl polyimides; polyethers; polyarylene oxides, such as polyphenylene oxide and polyxylylene oxide; polyesteramide diisocyanates; polyurethanes; polyesters, including polyacrylates, such as polyethylene, terephthalate, polyalkyl methacrylates, polyalkyl acrylates, polyphenylene terephthalate, etc.; polysulfides; polymers from monomers having $\alpha$-olefinic unsaturation other than mentioned above such as polyethylene, polypropylene, polybutene-1, poly-4-methylbutene-

6

1; polyvinyls, e.g., polyvinylchloride polyvinylfluoride, polyvinylidene chloride, polyvinylidene fluoride, polyvinyl alcohol, polyvinyl esters such as polyvinyl acetate and polyvinyl propionate, polyvinyl pyridines, polyvinyl pyrrolidones, polyvinyl ethers, polyvinyl ketones, polyvinyl aldehydes such as polyvinyl formal and polyvinyl butyral, polyvinyl amines, polyvinyl phosphates and polyvinyl sulfates; polyallyls; polytriazoles, polybenzimidazoles; polycarbodiimides; polyphosphazines, etc., and interpolymers including block interpolymers containing repeating units from the above such as terpolymers of acrylonitrile-vinyl-bromide-sodium salt of p-sulfophenylmethallyl ether; and grafts and blends containing any of the foregoing. Typical substituents providing substituted polymers include halogens such as fluorine, chlorine and bromine; hydroxyl groups; lower alkyl groups; lower alkoxy groups; monocyclic aryl; lower acyl groups and the like.

The membrane material is preferably as thin as possible in order to improve the rate of permeation through the membrane, yet of sufficient thickness to insure adequate strength to the membrane to withstand the permeation conditions, including the differential pressures and differential partial pressure employed. Membranes and hollow fibre membranes may be isotropic, i.e., have substantially the same density throughout, or they may be anisotropic, i.e., having at least one zone of greater density than at least one other zone of the membranes. The membranes may be chemically homogeneous, i.e. constructed of the same material, or they may be composite membranes. Suitable composite membranes may comprise a thin layer which effects the separation of gases on a porous physical support which provides the necessary strength to the composite membrane to withstand the permeation conditions. Particularly preferred membranes are the multicomponent membranes disclosed by Henis, et al., in Belgian Patent No. 860,811.

These membranes comprise a porous gas separation membrane which substantially effects the separation and a coating material in occluding contact with the porous separation membrane wherein the material of the coating does not significantly effect the separation. These multicomponent membranes are particularly attractive for gas separations of the faster permeating gases such as hydrogen, oxygen, helium, carbon dioxide and hydrogen sulfide from methane, nitrogen and other slower permeating gases in that good selectivity for separation and high flux of the faster permeating gases through the membranes can be obtained.

The materials for coating of these multicomponent membranes may be natural or synthetic substances, and are often polymers, which advantageously exhibit the appropriate properties to provide occluding contact with the porous gas separation membrane. Synthetic substances include both addition and condensation polymers. Typical of the useful materials which can comprise the coating are polymers which can be substituted or unsubstituted and which are solid or liquid under gas separation conditions, and include synthetic rubbers; natural rubbers; relatively high molecular weight and/or high boiling liquids; organic prepolymers; polysiloxanes; silicone polymers; polysilazanes; polyurethanes; polyepichlorohydrins; polyamines; polyimines; polyamides including polylactams; acrylonitrile-containing copolymers such as poly($\alpha$-chloroacrylonitrile) copolymers; polyesters including polyacrylates, e.g., polyalkyl acrylates and polyalkyl methacrylates, wherein the alkyl groups have from 1 to about 8 carbon atoms, polysebacates, polysuccinates, and alkyd resins; terpenoid resins; linseed oil; cellulosic polymers; polysulfones, especially aliphatic-containing polysulfones; polyalkylene glycols such as polyethylene glycol, polypropylene glycol, etc.; polyalkylene polysulfates; polypyrrolidones; polymers from monomers having olefinic unsaturation such as polyolefins, e.g., polyethylene, polypropylene, polybutadiene, poly(2,3-dichlorobutadienes), polyisopropene, polychloroprene; polystyrene, including polystyrene copolymers, e.g., styrene butadiene copolymers; polyvinyls such as polyvinyl alcohol, polyvinyl aldehydes, e.g., polyvinyl formal and polyvinyl butyral, polyvinyl ketones, e.g., polymethylvinyl ketone, polyvinyl esters, e.g., polyvinyl benzoates, polyvinyl halides, e.g., polyvinyl bromide; polyvinylidene halides; polyvinylidene carbonates; poly(N-vinylmaleamide); etc., poly(1,5-cyclooctadiene); poly(methylisopropenyl ketone); fluorinated ethylene copolymers; polyarylene oxides, e.g., polyxylylene oxides; polycarbonates; polyphosphates, e.g., polyethylene methyl phosphate; and the like, and any interpolymers including the interpolymers containing repeating units from the above, and grafts and blends containing any of the foregoing. The materials may or may not be polymerized after application to the porous separation membrane.

The membrane permeators comprise selectively permeable membranes mounted in a suitable housing provided with manifolds and associated with an inlet and separate outlets for feed gas mixtures, non-permeated gas mixtures and permeated gas mixtures. The membranes can be of any desired form such as the flat film or planar type, the spiral wound module type or the hollow fiber module type. In the process of the present invention hollow fiber membranes are preferred. Preferably the membrane permeators take the form of hollow fiber membrane permeators wherein the fibres are mounted in a shell which is provided with an inlet and outlets and manifolded so that the feed gas mixture under affirmative pressure is supplied either to the bores of the fibers or, more preferably, to the outside or shell side of the hollow fiber membranes. The non-permeated gas mixture is withdrawn from a manifold at the opposite ends of the fiber bores or of the shell and the permeated gas mixture is withdrawn from the opposite fiber surfaces, i.e., from the fiber bores if the feed gas mixture is fed to the shell. Most desirably the hollow fiber membrane permeators will provide for shell side axial or radial flow of the feed gas mixture with removal of the non-permeated gas mixture from a remote point of the shell and recovery of the permeated gas mixture from the bores of the fibers. Either cocurrent or countercurrent flow of the feed gas mixture and the permeated gas mixture comprising the faster permeating gas can be employed with countercurrent flow usually being preferred.

The membrane permeator, or permeators if multiple permeators are employed, provide two effluent gas mixtures, the permeated gas mixture removed from the permeate side of the membranes and comprising a more concentrated mixture of the faster permeating gas and the non-permeated gas mixture removed from the opposite or feed side of the membranes and comprising a reduced concentration of the faster permeating gas and a larger proportion of the slower permeating gases present in the feed gas mixture. This latter non-permeated gas mixture is suitable for use in any convenient process, for fuel gas or for disposal. This non-permeated gas mixture will reflect substantially the same variations in flow rate as in the feed gas mixture. Within the preferred range of membrane number the pressure drop within the membrane permeators, i.e., the decrease in pressure caused by restrictions to the flow of the non-permeated gas mixture, is relatively minor and little damping of the variations in flow rate will be observed. At very high flow rates of feed gas mixture, i.e., at higher membrane numbers above about 3.3, more substantial pressure drops due to the restrictions of the membrane permeator housing or shell and the associated piping will result in some degree of damping of the variations in flow rate and sometimes pressures in this non-permeated gas mixture as it is removed from the membrane permeator or permeators. This non-permeated gas mixture can be subjected to any desired physical treatment to further reduce such variations and changes in the flow rate such as collection in surge tanks, compression or the like, and directed for use in any desired process. It can be employed alone or in mixture with other fuels as fuel gas or it may be disposed of. This non-permeated gas mixture can be handled in the same manner as the feed gas mixture was previously handled in the processes from which the feed gas mixtures are derived.

The recovered permeated gas mixture comprising the faster permeating gas present in more concentrated form is likewise suitable for any desired use. This permeated gas mixture will demonstrate much less variation in flow rate than the feed gas mixture, varying by not more than about 0.6 and frequently less than 0.5 of the percentage variation in flow rate of the feed gas mixture. The permeated gas mixture will be comprised of the faster permeating gas in more concentrated form and frequently in relatively highly concentrated form. Generally, when the feed gas mixture comprises from about 50 percent or more faster permeating gas the recovered permeated gas mixture will comprise at least 80 percent faster permeating gas and often will comprise greater than 90 or 95 percent such gas.

Thus, the permeated gas mixture recovered by the process is suitable for use directly in any process utilizing the faster permeating gas and to which the concentration of that gas in the permeated gas mixture is appropriate. When oxygen comprises the faster permeating gas it can be employed in oxidation, partial oxidation or combustion processes or stored for other uses. Varied uses for the other fast permeating gases are widely known, as for helium, carbon dioxide, hydrogen sulfide and the like. When hydrogen constitutes the faster permeating gas concentrated in the permeated gas mixture it is suitable for use in any hydrogen treating or hydrogen-consuming process in which the concentration of hydrogen present in the permeated gas mixture is acceptable. It is often ideally suited for direct recycle to the process from which the feed gas mixture is derived, as in the case of many hydrogenation reactions. For example, in Example 1 below the permeated gas mixture is recycled to the hydrogenation reaction with the recirculating blanketing gas affording a higher partial pressure of hydrogen in such blanketing gas. It can also serve to react with additional quantities of the reactant being hydrogenated to improve the yield of such hydrogenation process. Thus, the method of the present invention affords economies by providing for recovery of large portions of purge gases previously lost to the most valuable use and achieves the result economically since the need for energy inputs to the method are frequently minimal.

The following examples are provided to further illustrate the method of the invention.

Example 1

A purge gas mixture is taken from a recirculating reaction blanketing gas from a catalytic hydrogenation of adiponitrile to produce the corresponding hexamethylene diamine in order to eliminate excess non-reactive gases and maintain a high hydrogen concentration of at least 80 mol % in the gas mixture blanketing the reaction. This purge gas mixture, which had been directed to a fuel header for disposal, was instead directed to a membrane permeator unit comprised of two permeators operating in parallel. The purge stream had previously been freed of all entrained liquids and had been scrubbed with water to remove water soluble reactant and product vapors. The purge gas mixture was delivered from the scrubbing treatment at a pressure of 9.9 atm (145 psi) and contained approximately 85 mol % hydrogen, 13 to 14 mol % methane and 1 to 2 mol % nitrogen.

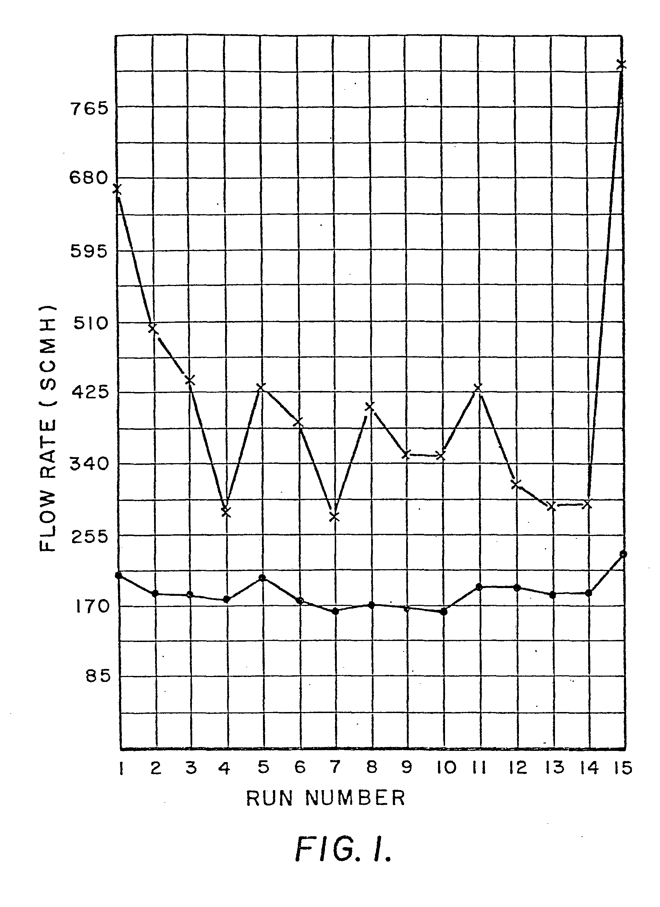

This scrubbed purge gas mixture constituted the feed gas mixture to the membrane permeator unit. During a test period of some 60 days the flow rate of this feed gas mixture varied over a very wide range of some 3x, ranging from 277 SCMH (standard cubic meters per hour) to 816 SCMH. It was unexpectedly observed that the flow rates of the permeated gas mixture from the membrane permeator unit was subject to a narrow range of variation from the lowest to the highest flow rate. Such permeated gas mixture flow rates varied from 162.8 SCMH to 235.1 SCMH or about 27% above and 12% below the design permeated flow rate of 184 SCMH despite the wide range in feed gas mixture flow rates to the membrane permeator unit. These results observed are set forth in Table 1 below and illustrated graphically in Figure 1 of the drawing.

The membrane permeators comprised hollow fiber membranes manifolded within a cylindrical casing for contact of the feed gas mixture with the outside of the hollow fibers and removal of the permeated gas mixture from the bores of the hollow fibers. The hollow fiber membranes were anisotropic polysulfone hollow fiber membranes coated on the outside surface with a cross-linked poly(siloxane) in occluding contact with such surface. The hollow fiber membranes were prepared substantially in accordance with the method disclosed in Example 64 of Belgian Patent No. 860,811 from polysulfone having a molecular weight in excess of 10,000 and a poly(siloxane) having a molecular weight in excess of 1000 prior to cross-linking. Their finished dimensions were an outside diameter of approximately 500 microns, an inside diameter of approximately 250 microns and a wall thickness of approximately 125 microns. Each permeator had an effective permeating surface area of approximately 90 square meters giving a total permeating surface area of approximately 180 square meters. When tested using pure hydrogen the permeability, or $P/l_{H_2}$ of each permeator was determined to be $74 \times 10^{-6}$ cc/cm$^2$sec cmHg.

The permeated gas mixture recovered from each membrane permeator was directed to the compressor for the recirculating blanketing gas and combined with that gas. The permeated gas mixture, highly concentrated in hydrogen served to maintain and increase the partial pressure of hydrogen in the blanketing gas. This enabled higher flow rates of purge gas to be diverted from the recirculating gas mixture while maintaining higher hydrogen partial pressures. The additional hydrogen available at high concentration in the permeated gas mixture when recycled to the hydrogenation process was also available to increase the yield of the hydrogenated product by allowing increased reactant to be hydrogenated.

In Table 1 below there are set out the flow rates of the respective feed and permeated gas mixtures, the compositions of the respective gas mixtures, the effective permeabilities, $P/l$, of the hydrogen and methane established and the resulting separation factor, or $\alpha\ H_2/CH_4$, for each of some 15 measured sampling periods over an approximately 60 day test period. The initial four sampling periods were daily, and thereafter approximately weekly except for the last. In Table 1 there are also set out the percentage of maximum potential flow rate of the permeated gas mixture and the membrane numbers for each sampling period determined based on the permeability of hydrogen, $P/l_{H_2}$, established for the membrane permeator using pure hydrogen. The pressure of the feed gas mixtures was maintained at approximately 9.9 atmospheres and the pressure of the permeated gas mixtures at approximately 1.9 atmospheres for a pressure differential of approximately 8.0 atmospheres throughout the test period. The initial effective permeability of the hollow fiber membranes to the constituent gases did not vary significantly. Nor did the $\alpha\ H_2/CH_4$.

TABLE 1
Flow rates and compositions of gas mixtures

| Run | 1 | 2 | 3 | 4 | 5 | 6 | 7 | 8 |
|---|---|---|---|---|---|---|---|---|
| Flow rates (SCMH): | | | | | | | | |
| Feed | 671.2 | 504.1 | 441.8 | 281.5 | 430.5 | 390.8 | 277.5 | 407.8 |
| Permeate | 206.7 | 189.8 | 184.1 | 177 | 203.9 | 175.6 | 164.2 | 169.9 |
| % Maximum* | 86 | 79 | 76.5 | 74 | 85 | 73 | 68 | 71 |
| Composition (Mol %) | | | | | | | | |
| Feed, H$_2$ | 84.9 | 85.6 | 83.6 | 84.4 | 84.1 | 83.1 | 83.8 | 82.0 |
| CH$_4$ | 13.7 | 13.2 | 14.9 | 14.1 | 14.6 | 15.5 | 14.6 | 16.7 |
| N$_2$ | 1.4 | 1.2 | 1.5 | 1.5 | 1.3 | 1.4 | 1.6 | 1.3 |
| Permeate, | | | | | | | | |
| H$_2$ | 99.1 | 99.1 | 98.5 | 98.0 | 98.5 | 98.6 | 98.8 | 98.5 |
| CH$_4$ | 0.8 | 0.8 | 1.3 | 1.8 | 1.4 | 1.3 | 1.0 | 1.3 |
| N$_2$ | 0.1 | 0.1 | 0.2 | 0.2 | 0.1 | 0.1 | 0.2 | 0.2 |
| Membrane number | 2.26 | 1.70 | 1.49 | .95 | 1.45 | 1.31 | .94 | 1.37 |
| $P/l_{H_2} \times 10^6$cc/cm$^2$ . sec$^2$ cmHg | 65 | 59.7 | 59.9 | 63.2 | 67.8 | 59.0 | 54.6 | 58.7 |
| $P/l_{CH_4} \times 10^6$cc/cm$^2$ . sec . cmHg | 2.1 | 1.9 | 2.6 | 3.0 | 3.0 | 2.3 | 2.2 | 2.9 |
| $\alpha\ H_2/CH_4$ | 30.5 | 30.8 | 23 | 21.1 | 22.2 | 25.8 | 24.6 | 26.8 |

TABLE 1 (cont.)

| Run | 9 | 10 | 11 | 12 | 13 | 14 | 15 |
|---|---|---|---|---|---|---|---|
| Flow rates (SCMH): | | | | | | | |
| Feed | 351.2 | 351.2 | 430.5 | 314.4 | 291.7 | 294.5 | 815.6 |
| Permeate | 167.1 | 162.8 | 192.6 | 192.6 | 181.3 | 184.1 | 235.1 |
| % Maximum* | 69 | 68 | 80 | 80 | 75 | 76.5 | 98 |
| Composition (Mol %) | | | | | | | |
| Feed, $H_2$ | 87.0 | 88.5 | 86.8 | 90.4 | 86.8 | 85.9 | 86.2 |
| $CH_4$ | 11.9 | 10.3 | 12.1 | 8.6 | 11.8 | 12.1 | 12.9 |
| $N_2$ | 1.1 | 1.2 | 1.1 | 1.0 | 1.4 | 2.0 | 0.9 |
| Permeate, | | | | | | | |
| $H_2$ | 99.0 | 99.2 | 99.0 | 99.3 | 98.9 | 98.7 | 99.0 |
| $CH_4$ | 0.9 | 0.7 | 0.9 | 0.6 | 1.0 | 1.1 | 0.9 |
| $N_2$ | 0.1 | 0.1 | 0.1 | 0.1 | 0.1 | 0.2 | 0.1 |
| Membrane number | 1.18 | 1.18 | 1.45 | 1.06 | .98 | .99 | 2.76 |
| $P/l_{H_2} \times 10^6 cc/cm^2$ . sec . cmHg | 52.2 | 48.6 | 59 | 57 | 57.6 | 59.2 | 74 |
| $P/l_{CH_4} \times 10^5 cc/cm^2$ . sec . cmHg | 2.1 | 1.7 | 2.3 | 2.3 | 2.3 | 2.5 | 2.9 |
| $\alpha$ $H_2/CH_4$ | 25.1 | 28.1 | 25.6 | 25.1 | 24.8 | 23.3 | 25.8 |

*Percentage of maximum potential flow rate of the permeated gas mixture.

Example 2

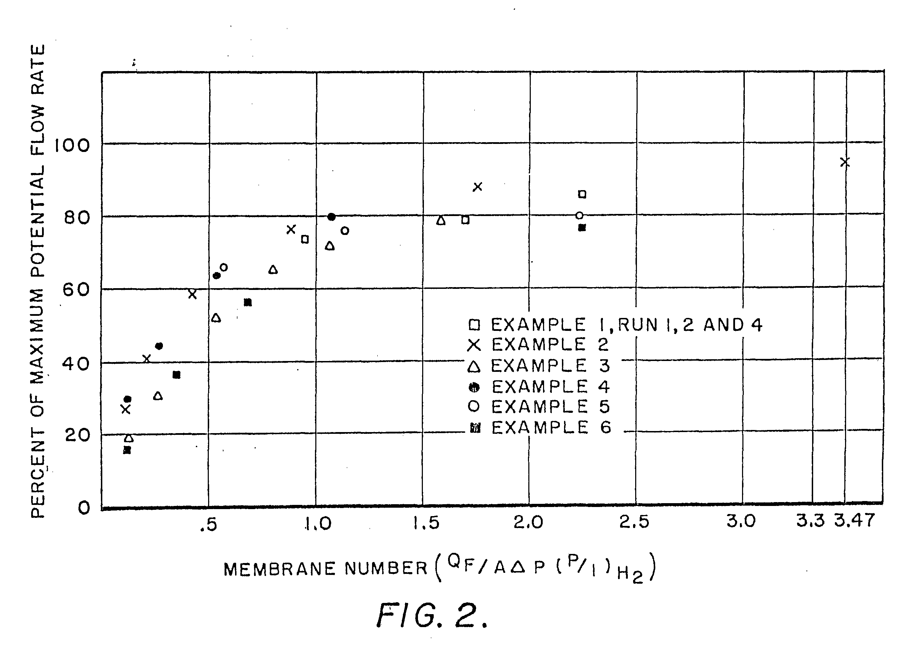

The flow rates of a feed gas mixture of approximately 65 percent hydrogen, 20 percent methane and lesser amounts of slower permeating gases are varied by large multiples to a membrane permeator comprised of the same hollow fiber membranes as described in Example 1 but having a permeating surface area of some 28 square meters and a similar P/l of hydrogen of $63 \times 10^{-6}$ cc/cm$^2$ . sec . cmHg and $\alpha$ $H_2/CH_4$ of 26.2. The pressure of the feed gas mixture is set at 136 atmospheres and the pressure of the permeated gas mixture is set at 68 atmospheres for a pressure differential of 68 atmospheres. The feed gas mixture flow rates are also stated in terms of membrane number. The resulting changes in the permeated gas mixture flow rates were determined by computer simulation and are reported in Table 2 below along with the values of the flow rates expressed as percentage of the maximum potential flow rate of the permeated gas mixture, which was determined for that permeator at the stated pressure differential to be 126.6 SCMH. The data is illustrated graphically in Figure 2 of the drawing. Runs 1, 2 and 4 of Example 1 are also illustrated in Figure 2 for comparison.

TABLE 2
Flow rates of feed and permeated gas mixtures

| | Feed flow rate | | Permeate flow rate | |
|---|---|---|---|---|
| Run | SCMH | Membrane No. | SCMH | Percent of maximum |
| 1 | 35.4 | .108 | 34.6 | 27 |
| 2 | 70.8 | .216 | 52.1 | 41 |
| 3 | 141.6 | .434 | 74.5 | 59 |
| 4 | 283.2 | .868 | 96.6 | 76 |
| 5 | 566.4 | 1.74 | 111.3 | 88 |
| 6 | 1132.8 | 3.47 | 119.2 | 94 |

Example 3

The flow rates of a feed gas mixture of the same composition as in Example 2 are varied to a membrane permeator comprised of the same hollow fiber membranes as described in Example 1 and having a permeating surface area of approximately 93 square meters with the same P/l of hydrogen of $63 \times 10^{-6}$ cc/cm$^2$ . sec . cmHg and the same $\alpha$ $H_2/CH_4$ of 26.2. The pressures of the feed gas mixture and the permeated gas mixture are set respectively at 68 atmospheres and 1.9 atmospheres for a pressure differential of 66.1 atmospheres. The feed gas mixture flow rates are also stated in terms of membrane number and the resulting permeated gas mixture flow rates are also stated as a percentage of the maximum potential flow rate of the permeated gas mixture, which was determined for that permeator at the stated pressure differential to be 692 SCMH. The flow rates as determined by computer simulation are set out in Table 3 below and illustrated graphically in Figure 2 of the drawing.

TABLE 3
Flow rates of feed and permeated gas mixtures

| | Feed flow rate | | Permeate flow rate | |
|---|---|---|---|---|
| Run | SCMH | Membrane No. | SCMH | Percent of maximum |
| 1 | 141.6 | .13 | 128.6 | 19 |
| 2 | 283.2 | .26 | 215 | 31 |
| 3 | 566.4 | .52 | 357.7 | 52 |
| 4 | 849.6 | .79 | 448.6 | 65 |
| 5 | 1132.8 | 1.03 | 500.4 | 72 |
| 6 | 1699.2 | 1.56 | 549.4 | 79 |

Example 4

The flow rates of the same feed gas mixture as described above are varied to a membrane permeator of the same hollow fiber membranes of the same P/l of hydrogen and $\alpha$ $H_2CH_4$ having a permeating surface area of approximately 186 square meters. The pressures of the feed gas mixture and the permeated gas mixture are set respectively at 68 atmospheres and 34 atmospheres for a pressure differential of 34 atmospheres. The feed gas mixture flow rates and resulting permeated gas mixture flow rates are also expressed as in Example 2 and 3 based upon the maximum potential flow rate of the permeated gas mixture determined to be 422 SCMH. The data determined by computer simulation are set out in Table 4 below and illustrated graphically in Figure 2 of the drawing.

TABLE 4
Flow rates of feed and permeated gas mixtures

| | Feed flow rate | | Permeate flow rate | |
|---|---|---|---|---|
| Run | SCMH | Membrane No. | SCMH | Percent of maximum |
| 1 | 141.6 | .13 | 128.3 | 30 |
| 2 | 283.2 | .26 | 191.7 | 45 |
| 3 | 566.4 | .52 | 268.2 | 64 |
| 4 | 1132.8 | 1.03 | 336.2 | 80 |

Example 5

The flow rates of the same feed mixture as described above are varied to a membrane permeator of similar hollow fiber membranes of the same P/l of hydrogen but an $\alpha$ $H_2/CH_4$ of 5 and having a permeating surface area of approximately 186 square meters. The pressures of the feed gas mixture and the permeated gas mixture are set respectively at 9.8 atmospheres and 1.9 atmospheres for a pressure differential of 7.9 atmospheres. The feed flow rates and resulting permeated gas mixture flow rates are also expressed as in Example 2 and 3 above based upon the maximum potential flow rate of the permeated gas mixture determined to be 172.5 SCMH. The data determined by computer simulation are set out in Table 5 below and illustrated graphically in Figure 2 of the drawing.

TABLE 5
Flow rates of feed and permeated gas mixtures

| | Feed flow rate | | Permeate flow rate | |
|---|---|---|---|---|
| Run | SCMH | Membrane No. | SCMH | Percent of maximum |
| 1 | 141.6 | .56 | 113.6 | 66 |
| 2 | 283.2 | 1.11 | 131.7 | 76 |
| 3 | 566.4 | 2.23 | 138.5 | 80 |
| 4 | 1132.8 | 4.19 | 141.3 | 82 |

Example 6

The flow rates of the same feed gas mixture as described above are varied to a membrane permeator of similar hollow fiber membranes having a P/l of hydrogen of $150 \times 10^{-6}$ $cc/cm^2 . sec . cmHG$, an $\alpha$ $H_2/CH_4$ of 30 and a permeating surface area of 93 square meters. The pressures of the feed gas mixture and the permeated gas mixtures are set respectively at 68 atmospheres and 1.9 atmospheres for a pressure differential of 66.1 atmospheres. The feed gas mixture flow rates and resulting permeated gas mixture flow rates are expressed as in Example 2 and 3 based upon the maximum potential flow rate of the permeated gas mixture determined to be 1644 SCMH. The data determined by computer simulation are set out in Table 6 below and illustrated graphically in Figure 2 of the drawing.

11

**0 017 463**

### TABLE 6
Flow rates of feed and permeated gas mixtures

| | Feed flow rate | | Permeate flow rate | |
|---|---|---|---|---|
| Run | SCMH | Membrane No. | SCMH | Percent of maximum |
| 1 | 283.2 | .11 | 261.1 | 16 |
| 2 | 849.6 | .34 | 596.4 | 36 |
| 3 | 1699.2 | .67 | 940.2 | 57 |
| 4 | 5098 | 2.24 | 1265.9 | 77 |

**Claims**

1. A process for recovering a gas from a gas mixture comprising contacting said gas mixture with one surface of a membrane selectively permeable to the said gas wherein the flow rate of the said gas mixture varies over a total range of at least 1.8x the minimum measured positive flow rate, at a positive partial pressure differential for said gas and at a membrane number of at least .5, said membrane number consisting of the quotient determined by the formula

$$\frac{Q_f}{A \cdot \Delta P \cdot P/l_{gas}}$$

wherein $Q_f$ is the flow rate of said gas mixture, A is the permeation surface area of said membrane, $\Delta P$ is the differential in pressure between said gas mixture and the permeated gas mixture and $P/l_{gas}$ is the permeability to said gas of said membrane, and recovering from the opposite surface of said membrane a permeated gas mixture more concentrated in said gas at a flow rate having a percentage variation no more than 0.6 of the percentage variation in the flow rate of the said gas mixture.

2. A process for recovering a gas from a gas mixture comprising contacting said gas mixture with one surface of a membrane selectively permeable to the said gas wherein the flow rate of said gas mixture varies over a total range of at least 1.8x the minimum measured positive flow rate, at a positive partial pressure differential for said gas and a membrane number of at least .5, said membrane number consisting of the quotient determined by the formula

$$\frac{Q_f}{A \cdot \Delta P \cdot P/l_{gas}}$$

wherein $Q_f$ is the flow rate of said gas mixture, A is the permeation surface area of said membrane, $\Delta P$ is the differential in pressure between said gas mixture and the permeated gas mixture and $P/l_{gas}$ is the permeability to said gas of said membrane, and recovering from the opposite surface of said membrane a permeated gas mixture more concentrated in said gas at a flow rate varying no more than 25 percent from 0.8 of maximum potential flow rate of the permeated gas mixture, said maximum potential flow rate of the permeated gas mixture determined by the formula

$$\frac{P/l_{gas} \cdot A \cdot (P_f X_{f\ gas} - P_p X_{p\ gas})}{X_{p\ gas}}$$

wherein $P/l_{gas}$ and A are as above, $P_f$ and $P_p$ are the respective pressures of said gas mixture and said permeated gas mixture and $X_{f\ gas}$ and $X_{p\ gas}$ are the respective mole fractions of said gas in said gas mixture and said permeated gas mixture.

3. A process of claim 1 wherein the flow rate of said contacted gas mixture varies over a total range of from about 1.8x to 5x the minimum measured positive flow rate.

4. A process of claim 1 wherein said membrane number is from .5 to 5.0.

5. A process of claim 1 wherein said positive partial pressure differential for said gas is at least about 3 atmospheres.

6. A process of claim 1 wherein said membrane has a separation factor of at least five for said gas in preference to at least one other gas in said gas mixture.

7. A process of claim 1 wherein said permeated gas mixture comprises at least 80 mole percent of said gas.

8. A process for recovering hydrogen from a gas mixture comprising contacting said gas mixture containing hydrogen with one surface of a membrane selectively permeable to hydrogen wherein the flow rate of the said gas mixture varies over a total range of at least 1.8x the minimum measured

12

positive flow rate, at a positive partial pressure differential for hydrogen and at a membrane number of at least .5, said membrane number consisting of the quotient determined by the formula

$$\frac{Q_f}{A \cdot \Delta P \cdot P/l_{H_2}}$$

wherein $Q_f$ is the flow rate of said gas mixture, A is the permeation area of said membrane, $\Delta P$ is the differential in pressure between said gas mixture and the permeated gas mixture and $P/l_{H_2}$ is the permeability to hydrogen of said membrane, and recovering from the opposite surface of said membrane a permeated gas mixture more concentrated in hydrogen at a flow rate having a percentage variation no more than 0.6 of the percentage variation in the flow rate of the said gas mixture.

9. A process for recovering hydrogen from a gas mixture comprising contacting said gas mixture containing hydrogen with one surface of a membrane selectively permeable to hydrogen wherein the flow rate of the said gas mixture varies over a total range of at least 1.8× the minimum measured positive flow rate, at a positive partial pressure differential for hydrogen and at a membrane number of at least .5, said membrane number consisting of the quotient determined by the formula

$$\frac{Q_f}{A \cdot \Delta P \cdot P/l_{H_2}}$$

wherein $Q_f$ is the flow rate of said gas mixture, A is the permeation area of said membrane, $\Delta P$ is the differential in pressure between said gas mixture and a permeated gas mixture and $P/l_{H_2}$ is the permeability to hydrogen of said membrane, and recovering from the opposite surface of said membrane a permeated gas mixture more concentrated in hydrogen at a flow rate varying no more than 25 percent from .8 of maximum potential flow rate of the permeated gas mixture, said maximum potential flow rate of the permeated gas mixture determined by the formula

$$\frac{P/l_{H_2} \cdot A \cdot (P_f X_{fH_2} - P_p X_{pH_2})}{X_{pH_2}}$$

wherein $P/l_{H_2}$ and A are as above, $P_f$ and $P_p$ are the respective pressures of said gas mixture and said permeated gas mixture and $X_{fH_2}$ and $X_{pH_2}$ are the respective mole fractions of hydrogen in said gas mixture and said permeated gas mixture.

10. A process of claim 8 wherein the flow rate of said contacted gas mixture varies over a total range of from 1.8× to 5× the minimum measured positive flow rate.

11. A process of claim 8 wherein said membrane number is from .5 to 3.3.

12. A process of claim 8 wherein said positive partial pressure differential for hydrogen is at least 3 atmospheres.

13. A process of claim 8 wherein said permeated gas mixture comprises at least 80 mole percent hydrogen.

14. A process of claim 8 wherein said membrane has a separation factor of at least five for hydrogen in preference to at least one other gas in said gas mixture.

15. A process of claim 9 wherein the flow rate of said permeated gas mixture varies no more tha 20 percent from .8 of the maximum potential flow rate of the permeated gas mixture.

16. A process of claim 8 or claim 9 wherein said contacted gas mixture is a hydrogen-containing purge gas removed from a recycled effluent gas from hydrogenation of an organic compound.

17. A process of claim 16 wherein said permeated gas mixture comprises at least 90 mole percent hydrogen.

18. A process of claim 16 wherein said permeated gas mixture is recycled to said hydrogenation.

19. A process of claim 16 wherein said permeated gas mixture is rejoined with the remainder of said recycled effluent gas.

20. A process of claim 16 wherein said organic compound comprises adiponitrile.


**Patentansprüche**

1. Verfahren zur Gewinnung eines Gases aus einer Gasmischung durch Inkontaktbringen der Gasmischung, deren Strömungsgeschwindigkeit innerhalb eines Gesamtbereichs von mindestens 1,8× der minimalen gemessenen positiven Strömungsgeschwindigkeit variiert, bei einer positiven Partialdruckdifferenz für das Gas und einer Membranzahl von mindestens 0,5 mit einer Oberfläche einer für das Gas selektiv durchlässigen Membran, wobei die Membranzahl dem Quotienten der folgenden Formel

$$\frac{Q_f}{A \cdot \Delta P \cdot P/l_{gas}}$$

entspricht, in der $Q_f$ die Strömungsgeschwindigkeit der Gasmischung, A die Durchlässigkeitsoberfläche der Membran, $\Delta P$ die Druckdifferenz zwischen der Gasmischung und der durchgelassenen Gasmischung und $P/l_{gas}$ die Durchlässigkeit der Membran für das Gas bedeuten, und Gewinnen einer durchgelassenen Gasmischung mit einer höheren Konzentration an dem Gas und einer Strömungsgeschwindigkeit mit einer prozentualen Änderung von nicht mehr als 0,6 der prozentualen Änderung der Strömungsgeschwindigkeit der Gasmischung an der gegenüberliegenden Oberfläche der Membran.

2. Verfahren zur Gewinnung eines Gases aus einer Gasmischung durch Inkontaktbringen der Gasmischung, deren Strömungsgeschwindigkeit innerhalb eines Gesamtbereichs von mindestens 1,8× der minimalen gemessenen positiven Strömungsgeschwindigkeit variiert, bei einer positiven Partialdruckdifferenz für das Gas und einer Membranzahl von mindestens 0,5 mit einer Oberfläche einer für das Gas selektiv durchlässigen Membran, wobei die Membranzahl dem Quotienten der folgenden Formel

$$\frac{Q_f}{A \cdot \Delta P \cdot P/l_{gas}}$$

entspricht, in der $Q_f$ die Strömungsgeschwindigkeit der Gasmischung, A die Durchlässigkeitsoberfläche der Membran, $\Delta P$ die Druckdifferenz zwischen der Gasmischung und der durchgelassenen Gasmischung und $P/l_{gas}$ die Durchlässigkeit der Membran für das Gas bedeuten, und Gewinnen einer durchgelassenen Gasmischung mit einer höheren Konzentration an dem Gas und einer Strömungsgeschwindigkeit, die um nicht mehr als 25% von 0,8 der maximalen potentiellen Strömungsgeschwindigkeit der durchgelassenen Gasmischung variiert, an der gegenüberliegenden Oberfläche der Membran, wobei die maximale potentielle Strömungsgeschwindigkeit der durchgelassenen Gasmischung durch die Formel

$$\frac{P/l_{gas} \cdot A \cdot (P_f X_{f\ gas} - P_p X_{p\ gas})}{X_{p\ gas}}$$

definiert ist, in der $P/l_{gas}$ und A die oben angegebenen Bedeutungen besitzen, $P_f$ und $P_p$ die Drücke der Gasmischung bzw. der durchgelassenen Gasmischung und $X_{f\ gas}$ und $X_{p\ gas}$ die Molenbrüche des Gases in der Gasmischung bzw. der durchgelassenen Gasmischung bedeuten.

3. Verfahren nach Anspruch 1, wobei die Strömungsgeschwindigkeit der in Kontakt gebrachten Gasmischung innerhalb eines Gesamtbereichs von etwa 1,8× bis 5× der minimalen gemessenen positiven Strömungsgeschwindigkeit variiert.

4. Verfahren nach Anspruch 1, worin die Membranzahl 0,5 bis 5,0 beträgt.

5. Verfahren nach Anspruch 1, worin die positive Partialdruckdifferenz für das Gas mindestens etwa 3 Atmosphären beträgt.

6. Verfahren nach Anspruch 1, worin die Membran einen Trennungsfaktor für das Gas von mindestens 5 gegenüber mindestens einem weiteren Gas in der Gasmischung aufweist.

7. Verfahren nach Anspruch 1, worin die durchgelassene Gasmischung mindestens 80 Mol-% des Gases enthält.

8. Verfahren zur Gewinnung von Wasserstoff aus einer Gasmischung durch Inkontaktbringen der Wasserstoff enthaltenden Gasmischung, deren Strömungsgeschwindigkeit innerhalb eines Gesamtbereichs von mindestens 1,8× der minimalen gemessenen positiven Strömungsgeschwindigkeit variiert, bei einer positiven Partialdruckdifferenz für Wasserstoff und einer Membranzahl von mindestens 0,5 mit einer Oberfläche einer für Wasserstoff selektiv durchlässigen Membran, wobei die Membranzahl dem Quotienten der folgenden Formel

$$\frac{Q_f}{A \cdot \Delta P \cdot P/l_{H_2}}$$

entspricht, in der $Q_f$ die Strömungsgeschwindigkeit der Gasmischung, A die Durchlässigkeitsoberfläche der Membran, $\Delta P$ die Druckdifferenz zwischen der Gasmischung und der durchgelassenen Gasmischung und $P/l_{H_2}$ die Durchlässigkeit der Membran für Wasserstoff bedeuten, und Gewinnen einer durchgelassenen Gasmischung mit einer höheren Wasserstoffkonzentration und einer Strömungsgeschwindigkeit mit einer prozentualen Änderung von nicht mehr als 0,6 der prozentualen Änderung der Strömungsgeschwindigkeit der Gasmischung an der gegenüberliegenden Oberfläche der Membran.

9. Verfahren zur Gewinnung von Wasserstoff aus einer Gasmischung durch Inkontaktbringen der

14

Wasserstoff enthaltenden Gasmischung, deren Strömungsgeschwindigkeit innerhalb eines Gesamtbereichs von mindestens 1,8x der minimalen gemessenen positiven Strömungsgeschwindigkeit variiert, bei einer positiven Partialdruckdifferenz für Wasserstoff und einer Membranzahl von mindestens 0,5 mit einer Oberfläche einer für Wasserstoff selektiv durchlässigen Membran, wobei die Membranzahl dem Quotienten der folgenden Formel

$$\frac{Q_f}{A \cdot \Delta P \cdot P/I_{H_2}}$$

entspricht, in der $Q_f$ die Strömungsgeschwindigkeit der Gasmischung, A die Durchlässigkeitsoberfläche der Membran, $\Delta P$ die Druckdifferenz zwischen der Gasmischung und der durchgelassenen Gasmischung und $P/I_{H_2}$ die Durchlässigkeit der Membran für Wasserstoff bedeuten, und Gewinnen einer durchgelassenen Gasmischung mit einer höheren Wasserstoffkonzentration und einer Strömungsgeschwindigkeit, die nicht mehr als 25% von 0,8 der maximalen potentiellen Strömungsgeschwindigkeit der durchgelassenen Gasmischung variiert, an der gegenüberliegenden Oberfläche der Membran, wobei die maximale potentielle Strömungsgeschwindigkeit der durchgelassenen Gasmischung durch die folgende Formel

$$\frac{P/I_{H_2} \cdot A \cdot (P_f X_{fH_2} - P_p X_{pH_2})}{X_{pH_2}}$$

definiert ist, in der $P/I_{H_2}$ und A die oben angegebenen Bedeutungen besitzen, $P_f$ und $P_p$ die Drücke für die Gasmischung bzw. die durchgelassene Gasmischung und $X_{fH_2}$ und $X_{pH_2}$ die Molenbrüche für Wasserstoff in der Gasmischung bzw. der durchgelassenen Gasmischung bedeuten.

10. Verfahren nach Anspruch 8, worin die Strömungsgeschwindigkeit der in Kontakt gebrachten Gasmischung innerhalb eines Gesamtbereichs von 1,8x bis 5x der minimalen gemessenen positiven Strömungsgeschwindigkeit variiert.

11. Verfahren nach Anspruch 8, worin die Membranzahl 0,5 bis 3,3 beträgt.

12. Verfahren nach Anspruch 8, worin die positive Partialdruckdifferenz für Wasserstoff mindestens 3 Atmosphären beträgt.

13. Verfahren nach Anspruch 8, worin die durchgelassene Gasmischung mindestens 80 Mol-% Wasserstoff enthält.

14. Verfahren nach Anspruch 8, worin die Membran einen Trennungsfaktor für Wasserstoff von mindestens 5 gegenüber mindestens einem anderen Gas in der Gasmischung aufweist.

15. Verfahren nach Anspruch 9, worin die Strömungsgeschwindigkeit der durchgelassenen Gasmischung um nicht mehr als 20% von 0,8 der maximalen potentiellen Strömungsgeschwindigkeit der durchgelassenen Gasmischung variiert.

16. Verfahren nach Anspruch 8 oder 9, worin die inkontaktgebrachte Gasmischung ein wasserstoffhaltiges Spülgas ist, das von einem rückgeführten Abstromgas der Hydrierung einer organischen Verbindung abgetrennt worden ist.

17. Verfahren nach Anspruch 16, worin die durchgelassene Gasmischung mindestens 90 Mol-% Wasserstoff enthält.

18. Verfahren nach Anspruch 16, worin die durchgelassene Gasmischung zu der Hydrierung zurückgeführt wird.

19. Verfahren nach Anspruch 16, worin die durchgelassene Gasmischung mit dem Rest des rückgeführten Abstromgases wieder vereinigt wird.

20. Verfahren nach Anspruch 16, worin die organische Verbindung Adipinsäuredinitril umfaßt.

## Revendications

1. Procédé pour récupérer un gaz à partir d'un mélange gazeux, consistant à mettre en contact ce mélange gazeux avec une surface d'une membrane sélectivement perméable vis-à-vis de ce gaz, où le débit du mélange gazeux varie sur une gamme totale d'au moins 1,8 fois le débit positif mesuré minimum, pour une différence de pression partielle positive pour ces gaz et pour un indice de membrane d'au moins 0,5, cet indice de membrane se composant du quotient déterminé par la formule:

$$\frac{Q_f}{A \cdot \Delta P \cdot P/I_{gaz}}$$

où $Q_f$ est le débit de ce mélange gazeux, A est la surface spécifique de perméation de cette membrane, $\Delta P$ est la différence de pression entre le mélange gazeux et le mélange gazeux ayant traversé et $P/I_{gaz}$

est la perméabilité à ce gaz de la membrane, et à récupérer, à partir de la surface opposée de cette membrane, un mélange gazeux ayant traversé concentré en ce gaz pour un débit ayant une variation de pourcentage non supérieure à 0,6 fois la variation de pourcentage du débit de ce mélange gazeux.

2. Procédé pour récupérer un gaz à partir d'un mélange gazeux, consistant à mettre en contact ce mélange gazeux avec une surface d'une membrane sélectivement perméable vis-à-vis de ce gaz, où le débit de ce mélange gazeux varie dans une gamme totale d'au moins 1,8 fois le débit positif mesuré minimum, pour une différence de pression partielle positive pour ce gaz et un indice de membrane d'au moins 0,5, cet indice de membrane se composant du quotient déterminé par la formule:

$$\frac{Q_f}{A \cdot \Delta P \cdot P/l_{gaz}}$$

où $Q_f$ est le débit de ce mélange gazuex, A est la surface spécifique de perméation de la membrane, $\Delta P$ est la différence de pression entre le mélange gazeux et le mélange gazeux ayant traversé et $P/l_{gaz}$ est la perméabilité à ce gaz de cette membrane, et à récupérer, à partir de la surface opposée de cette membrane, un mélange gazeux ayant traversé plus concentré en ce gaz pour un débit ne variant de pas plus de 25% à partir de 0,8 fois le débit potentiel maximum du mélange gazeux ayant traversé, ce débit potentiel maximum du mélange gazeux ayant traversé étant déterminé par la formule:

$$\frac{P/l_{gaz} \cdot A \cdot (P_f X_{f\,gaz} - P_p X_{p\,gaz})}{X_{p\,gaz}}$$

où $P/l_{gaz}$ et A sont comme ci-dessus, $P_f$ et $P_p$ sont les pressions respectives du mélange gazeux et du mélange gazeux ayant traversé et $X_{f\,gaz}$ et $X_{p\,gaz}$ sont des fractions molaires respectives de ce gaz dans le mélange gazeux et dans le mélange gazeux ayant traversé.

3. Procédé selon la revendication 1, dans lequel le débit du mélange gazeux mis en contact varie dans une gamme totale d'environ 1,8 fois à 5 fois le débit positif mesuré minimum.

4. Procédé selon la revendication 1, dans lequel l'indice de membrane est de 0,5 à 5,0.

5. Procédé selon la revendication 1, dans lequel la différence de pression partielle positive pour ce gaz est au moins environ 3 atmosphères.

6. Procédé selon la revendication 1, dans lequel la membrane a un facteur de séparation d'au moins cinq pour ce gaz de préférence à au moins un autre gaz dans le mélange de gaz.

7. Procédé selon la revendication 1, dans lequel le mélange gazeux ayant traversé comprend au moins 80% en mole de ce gaz.

8. Procédé pour récupérer de l'hydrogène à partir d'un mélange gazeux, consistant à mettre en contact ce mélange gazeux contenant de l'hydrogène avec une surface d'une membrane sélectivement perméable vis-à-vis de l'hydrogène, où le débit du mélange gazeux varie dans une gamme totale d'au moins 1,8 fois le débit positif mesuré minimum, pour une différence de pression partielle positive pour l'hydrogène et pour un indice de membrane d'au moins 0,5, cet indice de membrane se composant du quotient déterminé par la formule:

$$\frac{Q_f}{A \cdot \Delta P \cdot P/l_{H_2}}$$

où $Q_f$ est le débit de ce melange gazeux, A est la surface de perméation de cette membrane, $\Delta P$ est la différence de pression entre le mélange gazeux et le mélange gazeux ayant traversé et $P/l_{H_2}$ est la perméabilité vis-à-vis de l'hydrogène de cette membrane, et à récupérer, à partir de la surface opposée de la membrane, un mélange gazeux ayant traversé plus concentré en hydrogène, pour un débit ayant une variation de pourcentage non supérieure à 0,6 fois la variation de pourcentage du débit du mélange gazeux d'alimentation.

9. Procédé pour récupérer de l'hydrogène à partir d'une mélange gazeux, consistant à mettre en contact ce mélange gazeux contenant de l'hydrogène avec une surface d'une membrane sélectivement perméable vis-à-vis de l'hydrogène, où le débit de ce mélange gazeux varie dans une gamme totale d'au moins 1,8 fois le débit positif mesuré minimum, pour une différence de pression partielle positive pour l'hydrogène et pour un indice de membrane d'au moins 0,5, cet indice de membrane se composant du quotient déterminé par la formule:

$$\frac{Q_f}{A \cdot \Delta P \cdot P/l_{H_2}}$$

où $Q_f$ est le débit de ce mélange gazeux, A est la surface de perméation de la membrane, $\Delta P$ est la

différence de pression entre le mélange gazeux et un mélange gazeux ayant traversé et $P/I_{H_2}$ est la perméabilité vis-à-vis de l'hydrogène de cette membrane, et à récupérer, à partir de la surface opposée de la membrane, un mélange gazeux ayant traversé plus concentré en hydrogène, suivant un débit ne variant pas plus de 25% par rapport à 0,8 fois le débit potentiel maximum du mélange gazeux ayant traversé, ce débit potentiel maximum du mélange gazeux ayant traversé étant déterminé par la formule:

$$\frac{P/I_{H_2} \cdot A \cdot (P_f X_{fH_2} - P_p X_{pH_2})}{X_{pH_2}}$$

où $P/I_{H_2}$ et A sont comme ci-dessus, $P_f$ et $P_p$ sont les pressions respectives de ce mélange gazeux et de ce mélange gazeux ayant traversé et $X_{fH_2}$ et $X_{pH_2}$ sont les fractions molaires respectives d'hydrogène dans le mélange gazeux et dans le mélange gazeux ayant traversé.

10. Procédé selon la revendication 8, dans lequel le débit de ce mélange gazeux mis en contact varie dans une gamme totale de 1,8 fois à 5 fois le débit positif mesuré minimum.

11. Procédé selon la revendication 8, dans lequel l'indice de membrane est de 0,5 à 3,3.

12. Procédé selon la revendication 8 dans lequel la différence de pression partielle positive pour l'hydrogène est d'au moins 3 atmosphères.

13. Procédé selon la revendication 8, dans lequel le mélange gazeux ayant traversé comprend au moins 80% en mole d'hydrogène.

14. Procédé selon la revendication 8, dans lequel la membrane a un facteur de séparation d'au moins cinq pour l'hydrogène de préférence à au moins un autre gaz dans le mélange gazeux.

15. Procédé selon la revendication 9, dans lequel le débit du mélange gazeux ayant traversé ne varie de pas plus de 20% par rapport à 0,8 fois le débit potentiel maximum du mélange gazeux ayant traversé.

16. Procédé selon la revendication 8 ou la revendication 9, dans lequel le mélange gazeux mis en contact est un gaz de purge contenant de l'hydrogène retiré d'un gaz d'effluent recyclé provenant de l'hydrogénation d'un composé organique.

17. Procédé selon la revendication 16, dans lequel le mélange gazeux ayant traversé comprend au moins 90% en mole d'hydrogène.

18. Procédé selon la revendication 16, dans lequel le mélange gazeux ayant traversé est recyclé vers l'hydrogénation.

19. Procédé selon la revendication 16, dans lequel le mélange gazeux ayant traversé est réuni au restant du gaz d'effluent recyclé.

20. Procédé selon la revendication 16, dans lequel le composé organique comprend de l'adiponitrile.

17

FIG. I.

FIG. 2.